# EUROPÄISCHE PATENTSCHRIFT

(11) **EP 0 518 163 B1**
(45) Veröffentlichungstag und Bekanntmachung des Hinweises auf die Patenterteilung: **09.08.1995**
(21) Anmeldenummer: 92109227.6
(22) Anmeldetag: 02.06.1992
(51) Int. Cl.: A01D 34/82

(54) **Mähwerk mit einem Mähwerksgehäuse**
Mowing apparatus with a mower housing
Appareil de coupe avec un carter

(30) Priorität: 14.06.1991 US 715157
(43) Veröffentlichungstag der Anmeldung: 16.12.1992
(73) Patentinhaber: DEERE & COMPANY, Moline, Illinois 61265 (US)
(72) Erfinder: Sebben, Daniel Angelo, West Bend, Wisconsin 53095 (US); Hutchison, Wayne Robert, Mayville, Wisconsin 53050 (US); Teal, Richard Donald, Horicon, Wisconsin 53032 (US); Wasson, Steve Charles, Midland, Michigan 48640 (US); Lorenzo, Luis, Midland, Michigan 48640 (US)
(74) Vertreter: Feldmann, Bernhard

(56) Entgegenhaltungen:
- FR-A- 2 552 202
- GB-A- 1 499 765
- GB-A- 2 167 636
- US-A- 3 008 283
- US-A- 3 798 987
- US-A- 3 875 728
- US-A- 3 967 438

## Beschreibung

Die Erfindung bezieht sich auf ein Mähwerk mit einem Mähwerksgehäuse, das eine sich im wesentlichen horizontal verlaufende Oberseite mit wenigstens einer sich bodenwärts erstreckenden Seitenwand aufweist und in dem ein Mähmesser umläuft, das an einer antreibbaren und vertikal gerichteten Welle drehfest angeordnet ist, die durch einen vertikalen Zylinderteil geführt ist, in dem zwei die Welle aufnehmende Lager mit gegenseitigem Abstand eingesetzt sind, die mit ihren Außenringen gegen mindestens einen radial in den Zylinderteil vorspringenden und in den Zylinderteil integrierten Stützabschnitt anliegen.

Derartige Mähwerke (US-A-3 875 728) finden bei Kleinschleppern oder sogenannten Rasentraktoren Verwendung. Sie können zwischen dessen Achsen aufgehängt sein und werden von dem Motor des Kleinschleppers aus angetrieben. Der Motor befindet sich in der Regel vorne oder hinten am Kleinschlepper und die Motorleistung muß zu der Antriebswelle für das oder die Mähmesser übertragen werden. Bei diesem bekannten Mähwerk sind drei Mähmesser in dem Mähwerksgehäuse vorgesehen, wobei deren Antriebswellen jeweils in einem gußeisernen Spindelgehäuse angeordnet sind, die mit der Oberseite des Mähwerksgehäuses verschraubt sind. Das Mähwerksgehäuse muß daher sehr stabil ausgebildet sein. Seine Fertigung und auch die Fertigung der Spindelgehäuse ist kostenaufwendig, ebenso wie die Montage.

Andererseits ist es bereits von einem Rasenmäher, der an Holmen und von Hand geführt ist, sich auf zwei vorderen und zwei rückwärtigen Laufrädern abstützt und dessen Mähmesser von einem auf dem Mähwerksgehäuse angeordneten Motor aus angetrieben wird, bekannt (US-A-3 008 283), in die Oberseite des Mähwerksgehäuses einen sich vertikal nach unten erstreckenden und relativ kurzen Zylinderteil zu integrieren, durch die eine vom Motor kommende Antriebswelle geführt ist, die sich von dem Motor aus nach unten in das Mähwerksgehäuse erstreckt und mit dem umlaufenden Messer verbunden ist. Der Mäher ist mit einem Rahmen ausgerüstet, der das Mäwerksgehäuse mit dem aufgesattelten Motor aufnimmt. Derartige Mäher müssen sehr stabil ausgerüstet sein, um das Gewicht des Motors und andere zum Einsatz erforderliche Komponenten aufnehmen zu können. Sie sind aus einem metallischen Werkstoff hergestellt und damit kostenintensiv in der Fertigung. Sie haben ein beträchtliches Gewicht.

Derartige Mäher leichter zu bauen, ist ebenfalls nicht mehr neu (US-A-4 711 077). Einige Teile dieses Mähers sind aus Kunststoff hergestellt. Allerdings ist bei solchen Mähern die das Mähmesser antreibende Welle nicht unmittelbar in dem Mähwerksgehäuse gelagert, d. h. die Oberseite des Mähwerkgehäuses braucht nicht so ausgebildet zu werden, daß sie das Gewicht der Spindel mit Mähmesser und Antriebsvorrichtung aufnehmen muß.

Die mit der Erfindung zu lösende Aufgabe wird darin gesehen, einen Mäher in Leichtbauweise herzustellen, wobei die das Mähwerk antreibende Welle in der Oberseite des Mähwerksgehäuses gelagert ist. Diese Aufgabe ist nach der Erfindung dadurch gegelöst worden, daß der Zylinderteil in die Oberseite des Mähwerksgehäuses integriert ist und durch in der Oberseite vorgesehene Verstärkungsrippen, die mit Bezug auf den Zylinderteil radial angeordnet sind, in seiner aufrechten Position stabilisiert ist. Durch diese Maßnahmen ist eine Leichtbauweise geschaffen, die eine besonders gute Steifigkeit aufweist und die leicht die von den verschiedenen Komponenten herrührenden Kräfte auffangen kann. Derartige Maßnahmen sind nicht ohne weiteres aus dem Maschinenbau zu übertragen, weshalb die Erfindung zum Auffangen der Kräfte, die von den umlaufenden Teilen ausgelöst werden, einen besonderen Zylinderteil vorsieht, der diese Kräfte und auch das Gewicht der umlaufenden Teile auffängt, eine betriebssichere und dauerhafte Anordnung gewährleistet und die beiden Lager vertikal festlegt.

Nach der Erfindung wird ferner vorgeschlagen, daß der Stützabschnitt aus vertikal sich erstreckenden Stützrippen gebildet ist, deren Länge dem Abstand der beiden Lager entspricht. Die Rippen reduzieren das Gewicht und kühlen schneller und gleichmäßiger als Vollmaterial. Deformationen, die beim Kühlen von Vollmaterial auftreten können, sind weniger zu befürchten, so daß sich der Zylinderteil mit größter Präzision herstellen läßt.

Vorteilhaft können die Stützrippen zu den Verstärkungsrippen ausgerichtet sein.

Eine weitere Maßnahme nach der Erfindung sieht vor, daß Befestigungsaugen in die Oberseite des Mähwerksgehäuses integriert sind. Diese dienen zum Anschließen des Mähwerksgehäuses an ein Fahrzeug über ein entsprechendes Gestänge. Bei Blechgehäusen müßten solche Befestigungsstellen in einem gesonderten Fertigungsgang angeschlossen werden, was kostenintensiv ist. Bei einer Kunststoffbauweise erübrigt sich das.

Auch kann ein Handgriff in die Oberseite des Mähwerksgehäuses integriert sein, der beispielsweise ein manuelles Tragen des Mähwerksgehäuses bei Wartungsarbeiten erleichtert.

Eine weitere Versteifung kann dadurch erreicht werden, daß die Seitenwand des Mähwerksgehäuses mit einer umlaufenden inneren Lippe versehen ist.

Damit die die Kräfte auffangenden Stützrippen dennoch relativ dünn ausgebildet werden können, wird nach der Erfindung außerdem vorgeschlagen, daß die Welle mit einem ersten, einem zweiten und einem dritten Abstandshalter versehen ist, die gegen die Innenringe der beiden Lager anliegen, wobei sich der erste Abstandshalter von dem oberen Lager aus nach oben erstreckt und gegen eine auf die Welle aufgesteckte Riemenscheibe anliegt, der zweite Abstandshalter zwischen den beiden Lagern vorgesehen ist und der dritte Abstandshalter sich von dem unteren Lager aus nach unten erstreckt und gegen einen Flanschteil anliegt, der mit der Welle verbunden ist. Die Abstandshalter können hülsenförmig ausgebildet sein, wobei der zweite Abstandshalter verhindert, daß auf die Stützrippen zu große Kompressionskräfte einwirken. Im zusammengebauten Zustand liegt das Mähmesser gegen die Unterseite des Flanschteiles an und auf die beiden Enden der Welle ist je eine Mutter aufschraubbar. Auf diese Weise sind die umlaufenden Teile des Mähwerkes, wie Welle, Mähmesser und Riemenscheibe in einfacher aber betriebssicherer Weise mit der Oberseite des Mähwerksgehäuses verbunden, das an einem Kleinschlepper aufgehängt werden kann, wobei die umlaufenden Teile von dem Motor des Kleinschleppers aus über einen Riementrieb angetrieben werden können.

Als besonders vorteilhaft wird es angesehen, daß das Mähwerksgehäuse aus Kunststoff hergestellt ist. Auf diese Weise wird die Leichtbauweise dadurch erreicht, daß das komplette Mähwerksgehäuse aus Kunststoff besteht und im Gießverfahren hergestellt werden kann. Das Gehäuse ist dadurch kratzfest und korrosionsbeständig ausgebildet. Das Gießverfahren erlaubt es, daß das Gehäuse bereits in seiner endgültigen Farbgebung hergestellt wird. Die Seitenwand des Mähwerksgehäuses braucht nicht in einem gesonderten Fertigungsprozeß mit der Oberseite verbunden zu werden. Der Fertigungsvorgang kann schneller und kostengünstiger ausgeführt werden.

In der Zeichnung ist ein nachfolgend näher erläutertes Ausführungsbeispiel der Erfindung dargestellt. Es zeigt:
- Fig. 1: ein Fahrzeug mit einem zwischen seinen Achsen angeschlossen Mähwerk,
- Fig. 2: das Gehäuse des Mähwerks in der Draufsicht und
- Fig. 3: einen Schnitt nach der Linie 3:3 in Fig. 2.

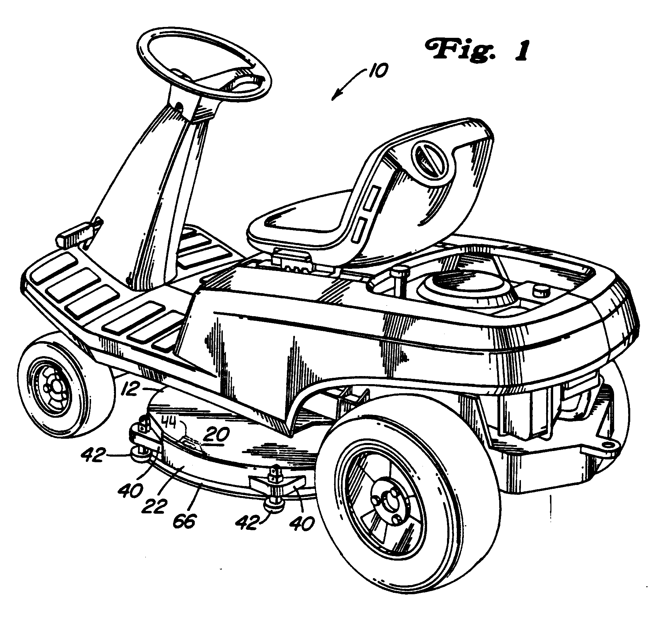

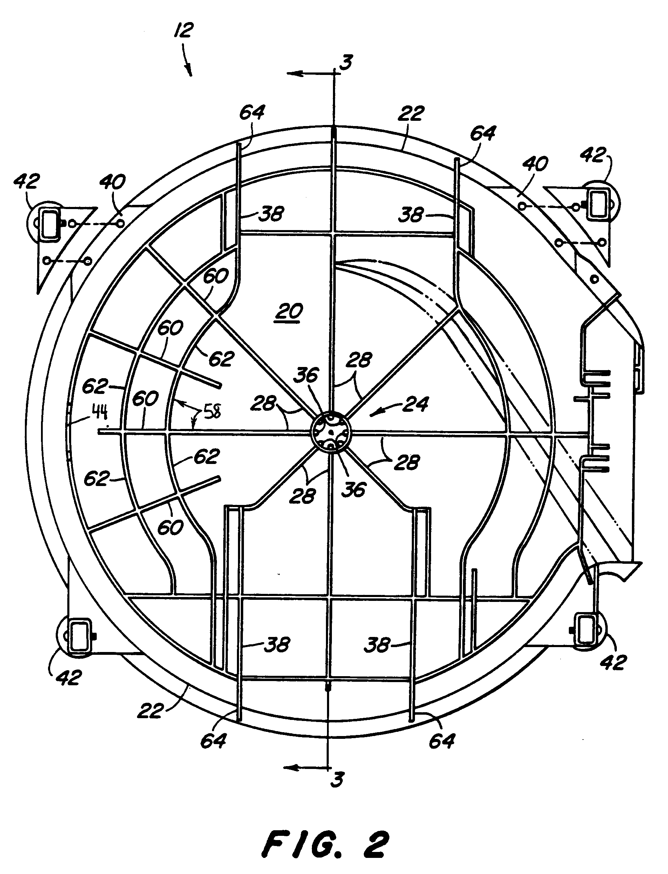

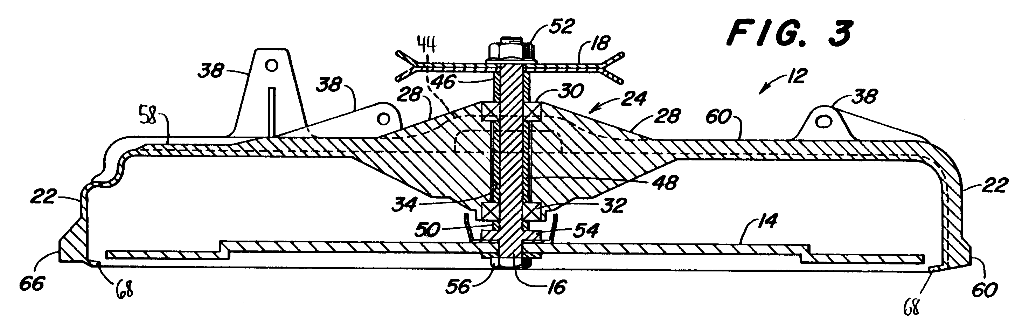

In Fig. 1 der Zeichnung ist ein für die Garten- und Landschaftspflege konzipiertes Fahrzeug mit 10 bezeichnet. Für den Rasenschnitt ist dieses Fahrzeug 10 mit einem Mähwerk ausgerüstet, dessen Gehäuse 12 in den Fig. 2 und 3 im einzelnen dargestellt ist. Das Mähwerk ist zwischen den Achsen des Fahrzeuges 10 aufgehängt und mit einem Mähmesser 14 versehen, das drehfest mit einer vertikal verlaufenden Welle 16 verbunden ist. Zum Antrieb des Mähmessers 14 dient eine auf dem oberen Ende der Welle 16 angeordnete Riemenscheibe 18, die über einen nicht dargestellten Riemen antreibbar ist. Der Riemen wiederum kann über einen nicht dargestellten Verbrennungsmotor des Fahrzeuges 10 aus angetrieben werden.

Das Mähwerksgehäuse 12 ist aus Kunststoff hergestellt und besteht aus einer im wesentlichen horizontal verlaufenden Oberseite 20, an die sich eine bodenwärts gerichtete Seitenwand 22 anschließt. Die Oberseite 20 und die umlaufende Seitenwand bilden damit ein nach unten hin offenes Gehäuse, in dem das Mähmesser 14 rotiert. In die Oberseite 20 ist ein Wellentragteil 24 integriert, der einen sich vertikal erstreckenden Zylinderteil 26 zur drehbaren Aufnahme der Welle 16 aufweist. Der Zylinderteil 26 wird durch eine Vielzahl von sich radial erstreckenden Verstärkungsrippen 28 in seiner aufrechten Stellung gehalten, die in die Oberseite 20 und in den Zylinderteil 26 integriert sind. Zur drehbaren Aufnahme der Welle 16 in dem Zylinderteil 26 dienen zwei Lager 30 und 32, weshalb der Zylinderteil einen Innendurchmesser aufweist, der dem Außendurchmesser der beiden Lager in etwa entspricht. Die beiden Lager 30 und 32 stützen sich mit ihren Außenringen auf in den Zylinderteil 26 radial hineinragenden Abschnitten 34 ab, die als mehrere vertikal sich erstreckende Stützrippen 36 ausgebildet sein können. Die Stützrippen 36 weisen eine vertikale Länge auf, die dem Abstand der beiden Lager zueinander entspricht. Sie sind in den Zylinderteil 26 integriert.

Befestigungsaugen 38, die ebenfalls einstückig mit dem Mähwerksgehäuse 12 ausgebildet sind, befinden sich auf der Oberseite 20 und dienen zum Anschließen des Mähwerkes über ein nicht dargestelltes Gestänge an das Fahrzeug 10. Das Mähwerksgehäuse 12 ist ferner noch im Bereich seiner sich nach unten erstreckenden Seitenwand 22 mit Anschlußmitteln 40 für Gleitschuhe 42 oder Rollen versehen, die im Einsatz ein Eintreten des Messers 14 in das Erdreich verhindern sollen. In die Oberseite 20 ist noch ein Handgriff 44 integriert, der so angeordnet ist, daß er leicht von einer sich auf dem Fahrzeug befindlichen Bedienungsperson erfaßt werden kann.

Die Innenringe der beiden Lager 30 und 32 stützen sich gegen eine erste, ein zweite und eine dritte Distanzhülse 46, 48 und 50 ab und nehmen die Welle 16 drehfest auf. Die erste Distanzhülse 46 erstreckt sich von dem oberen Lager 30 aus nach außen und stützt die Riemenscheibe 18 ab, die wiederum auf der Welle 16 durch eine auf diese aufschraubbare Mutter 52 gesichert ist. Die dritte Distanzhülse 50 erstreckt sich von dem zweiten und unteren Lager 32 aus nach unten und liegt gegen einen Flanschteil 54 an, der Bestandteil der Welle 16 ist. Bei angezogener Mutter 52 werden die Riemenscheibe 18, die Distanzhülsen 46, 48 und 50 und die Innenringe der beiden Lager 30 und 32 gegen den Flanschteil 54 der Welle 16 gedrückt und damit in ihrer gegenseitigen Position gesichert. Da die Mutter 52 gegen eine Seite der Riemenscheibe 18 über einen Ring und die Riemenscheibe gegen die erste Distanzhülse 46 anliegt, ist auch bei angezogener Mutter 52 die Riemenscheibe 18 mit der Welle 16 drehfest verbunden. Das Mähmesser 14 ist auf das untere Ende der Welle 16 aufgesetzt und wird durch eine gegen seine Unterseite anliegende Mutter 56 gesichert, wobei das Messer mit seiner Oberseite gegen die Unterseite des Flanschteiles 54 an der Welle 16 anliegt. In diesem Bereich kann die Welle 16 noch eine Schutzkappe tragen, die verhindert, daß geschnittenes Gut in den Bereich des unteren Lagers 32 gelangen kann. Bei angezogener Mutter 56 ist auch das Messer 14 mit der Welle 16 drehfest verbunden, da es nach oben gegen den Flanschteil 54 gedrückt wird.

Auf der Oberseite 20 des Mähwerkgehäuses 12 sind neben den Verstärkungsrippen 28 noch sich ebenfalls radial erstreckende Rippen 60 und der Kreisform der Oberseite 20 angepaßte Rippen 62 vorgesehen. Sie dienen alle zur Versteifung des Mähwerksgehäuses, damit dieses ansonsten relativ dünn ausgebildet ist. Auch die Seitenwand 22 wird versteift durch Rippen 64, die sich von den Befestigungsaugen 38 zunächst nach außen und dann nach unten erstrecken. Am unteren Ende der Seitenwand 22 sind noch eine außen umlaufende Rippe 66 und eine innere Lippe 68 vorgesehen. Im Ganzen gesehen wird somit dem Mähwerksgehäuse eine ausreichende Festigkeit verliehen, die ansonsten eine leichte Bauweise zuläßt, aber das Gehäuse so stabil macht, daß es ebenso wie ein Metallgehäuse das Mähmesser mit seinem Antrieb und die Verbindungsstellen für seinen Anschluß an das Fahrzeug betriebssicher aufnimmt.

Die im Inneren des Zylinderteils 26 vorgesehenen Stützrippen 36 tragen das Gewicht der Welle 16, der Distanzhülsen 46, 48 , 50 und des Messers 14. Die erste Distanzhülse 46 wird damit nach unten gezogen und hält damit das obere Lager 30 fest gegen die obere Begrenzung der Stützrippen 36. Gegen die unteren Begrenzungen der Stützrippen 36 wird das untere Lager 32 mit seinem Außenring gedrückt. Sollten beim Einsatz auf das Messer Kräfte einwirken, die dieses zusammen mit der Welle 16 nach oben drücken wollen, so wird dem durch die unteren Begrenzungen der Stützrippen ebenfalls entgegengewirkt. Die Stützrippen legen damit die Welle 16 vertikal fest. Ein vertikales Verschieben der Welle 16 in dem Zylinderteil 26 ist damit ausgeschlossen. Eine gleichmäßige Schnitthöhe ist die Folge. Andererseits nehmen die Stützrippen keine allzu großen Kräfte im Einsatz auf, da die zweite Distanzhülse zwischen den beiden Lagern 30 und 32 vor gesehen ist. Es bestehen deshalb keine Bedenken, auch die Stützrippen einteilig mit dem Mähwerksgehäuse aus Kunststoff herzustellen. Der Zylinderteil 26 könnte natürlich im Bereich der Stützrippen 36 aus Vollmaterial bestehen. Hierdurch würde allerdings die Abkühlzeit beim Gießprozeß verlängert. Infolge der vorgesehenen Rippen läßt sich damit das Mähwerksgehäuse 12 schneller herstellen und der Abkühlvorgang ist gleichmäßiger. Ein gleichmäßiger Abkühlvorgang trägt auch dazu bei, daß beim Formen weniger oder keine Deformationen auftreten, so daß der Zylinderteil 26 mit seinen Stützrippen 36 sehr präzise gegossen werden kann. Das gleichmäßige Abkühlen wird auch dadurch noch unterstützt, daß die Stützrippen 36 zu den sich radial erstreckenden Verstärkungsrippen 28 ausgerichtet sind.

Das Mähwerksgehäuse 12 kann aus einem Thermoplast oder einem Polyethylen hoher Dichte bestehen. Es kann im Spritzguß- oder Druckgußverfahren hergestellt werden. Das Mähwerksgehäuse läßt sich direkt in der gewünschten Farbgebung gießen. Ein nachträgliches Spritzen ist nicht mehr erforderlich. Die Farbgebung ist dauerhaft. Die Kunststoffherstellung bringt auch noch den Vorteil, daß ein derart hergestelltes Mähwerksgehäuse kratzfest und korrosionsbeständig ist.

Das Mähwerksgehäuse 12 wird mit allen seinen Bestandteilen, wie Befestigungsaugen 38, die verschiedenen Rippen, dem Handgriff und dem Wellentragteil 24, einstückig gegossen. Die einzelnen Bestandteile brauchen daher nicht gesondert gefertigt zu werden. Der Herstellungsvorgang ist daher relativ kurz und kostengünstig. Losteile können nicht verlegt werden oder verloren gehen. Vorgegebene Toleranzen werden auch nach langen Einsatzzeiten nicht überschritten.

Anstelle der zweiten Distanzhülse 48 können auch mehrere einzelne Hülsen eingesetzt werden, die, sollten sie einmal durch zu hohe Belastungen beschädigt worden sein, leicht ersetzt werden können.

## Patentansprüche

1. Mähwerk mit einem Mähwerksgehäuse (12), das eine sich im wesentlichen horizontal verlaufende Oberseite (20) mit wenigstens einer sich bodenwärts erstreckenden Seitenwand (22) aufweist und in dem ein Mähmesser (14) umläuft, das an einer antreibbaren und vertikal gerichteten Welle (16) drehfest angeordnet ist, die durch einen vertikalen Zylinderteil (26) geführt ist, in dem zwei die Welle (16) aufnehmende Lager (30, 32) mit gegenseitigem Abstand eingesetzt sind, die mit ihren Außenringen gegen mindestens einen radial in den Zylinderteil (26) vorspringenden und in den Zylinderteil (26) integrierten Stützabschnitt (34) anliegen, dadurch gekennzeichnet, daß der Zylinderteil (26) in die Oberseite (20) des Mähwerksgehäuses (12) integriert ist und durch in der Oberseite (20) vorgesehene Verstärkungsrippen (28), die mit Bezug auf den Zylinderteil (26) radial angeordnet sind, in seiner aufrechten Position stabilisiert ist.

2. Mähwerk nach Anspruch 1, dadurch gekennzeichnet, daß der Stützabschnitt (34) aus vertikal sich erstreckenden Stützrippen (36) gebildet ist, deren Länge dem Abstand der beiden Lager (30, 32) entspricht.

3. Mähwerk nach Anspruch 1 und 2, dadurch gekennzeichnet, daß die Stützrippen (36) zu den Verstärkungsrippen (28) ausgerichtet sind.

4. Mähwerk nach Anspruch 1, dadurch gekennzeichnet, daß Befestigungsaugen (38) in die Oberseite (20) des Mähwerksgehäuses (12) integriert sind.

5. Mähwerk nach Anspruch 1, dadurch gekennzeichnet, daß ein Handgriff (44) in die Oberseite (20) des Mähwerksgehäuses integriert ist.

6. Mähwerk nach Anspruch 1, dadurch gekennzeichnet, daß die Seitenwand (22) des Mähwerksgehäuses (12) mit einer umlaufenden inneren Lippe (68) versehen ist.

7. Mähwerk nach einem oder mehreren der vorherigen Ansprüche, dadurch gekennzeichnet, daß die Welle (16) mit einem ersten, einem zweiten und einem dritten Abstandshalter (46, 48, 50) versehen ist, die gegen die Innenringe der beiden Lager (30, 32) anliegen, wobei sich der erste Abstandshalter (46) von dem oberen Lager (30) aus nach oben erstreckt und gegen eine auf die Welle (16) aufgesteckte Riemenscheibe (18) anliegt, der zweite Abstandshalter (48) zwischen den beiden Lagern (30, 32) vorgesehen ist und der dritte Abstandshalter (50) sich von dem unteren Lager (32) aus nach unten erstreckt und gegen einen Flanschteil (54) anliegt, der mit der Welle (16) verbunden ist.

8. Mähwerk nach Anspruch 7, dadurch gekennzeichnet, daß das Mähmesser (14) gegen die Unterseite des Flanschteiles (54) anliegt.

9. Mähwerk nach den Ansprüchen 7 und 8, dadurch gekennzeichnet, daß auf die beiden Enden der Welle (16) je eine Mutter (52, 56) aufschraubbar ist.

10. Mähwerk nach einem oder mehreren der vorherigen Ansprüche, dadurch gekennzeichnet, daß das Mähwerksgehäuse aus Kunststoff hergestellt ist.

## Claims

1. A mower mechanism with a mower mechanism housing (12) which has a substantially horizontally extending upper side (20) with at least one sidewall (22) extending towards the ground and in which a mower blade (14) rotates, being fitted rotationally fast on a drivable and vertically disposed shaft (16) which is passed through a vertical cylindrical portion (26) in which two bearings (30, 32) receiving the shaft (16) are fitted, spaced from one another and having outer races bearing against at least one abutment section (34) integral with the cylindrical portion (26) ad projecting radially into the cylindrical portion (26), characterized in that the cylindrical portion (26) is integrated into the upper side (20) of the mower mechanism housing (12) and is stabilised in its upright position by reinforcing ribs (28) which are provided in the upper side (20) and are arranged radially with respect to the cylindrical portion (26).

2. A mower mechanism according to claim 1, characterized in that the support section (34) is formed by vertically extending support ribs (36) whose length corresponds to the spacing of the two bearings (30, 32).

3. A mower mechanism according to claim 1 and 2, characterized in that the support ribs (36) are aligned with the reinforcing ribs (28).

4. A mower mechanism according to claim 1, characterized in that attachment eyes (38) are integrated into the upper side (20) of the mower mechanism housing (12).

5. A mower mechanism according to claim 1, characterized in that a handle (44) is integrated in the upper side (20) of the mower mechanism housing.

6. A mower mechanism according to claim 1, characterized in that the sidewall (22) of the mower mechanism housing (12) is provided with a circumferential inner lip (68).

7. A mower mechanism according to one or more of the preceding claims, characterized in that the shaft (16) is provided with first, second and third spacers (46, 48, 50), which bear against the inner races of the two bearings (30,32), wherein the first spacer (46) extends up from the upper bearing (30) and bears against a pulley (18) fitted on the shaft (16), the second spacer (48) is provided between the two bearings (30, 32) and the third spacer (50) extends down from the lower bearing (32) and bears against a flange part (54) which is connected to the shaft (16).

8. A mower mechanism according to claim 7, characterized In that the mower blade (14) bears against the underside of the flange part (54).

9. A mower mechanism according to claims 8 and 9, characterized in that a nut (52, 56) can be screwed on to each of the two ends of the shaft (16).

10. A mower mechanism according to one or more of the preceding claims, characterized in that the mower mechanism housing is made from plastics material.

## Revendications

1. Unité de coupe comportant un carter (12), qui possède une face supérieure (20) qui s'étend sensiblement horizontalement et comporte au moins une paroi latérale (22) qui s'étend en direction du sol, et dans lequel une lame de coupe (14) tourne, qui est montée avec blocage en rotation sur un arbre (16) qui peut être entraîné, est orienté verticalement et s'étend dans une partie cylindrique verticale (26) dans laquelle sont insérés, à une certaine distance réciproque, deux paliers (30,32) qui reçoivent l'arbre (16), qui s'appliquent, par leurs pistes extérieures, contre au moins une section de support (34) qui fait saillie radialement dans la partie cylindrique (26) et est intégrée dans cette dernière, caractérisée en ce que la partie cylindrique (26) est intégrée dans la face supérieure (20) du carter (12) de l'unité de coupe et est stabilisée dans sa position verticale au moyen de nervures de renforcement (28), qui sont prévues dans la face supérieure (20) et sont disposées radialement par rapport à la partie cylindrique (26).

2. Unité de coupe selon la revendication 1, caractérisée en ce que la section de support (34) est formée par des nervures de support (36) qui s'étendent verticalement et dont la longueur correspond à la distance entre les deux paliers (30,32).

3. Unité de coupe selon les revendications 1 et 2, caractérisée en ce que les nervures de support (36) sont dirigées vers les nervures de renforcement (28).

4. Unité de coupe selon la revendication 1, caractérisée en ce que les oeillets de fixation (38) sont intégrés dans la face supérieure (20) du carter (12) de l'unité de coupe.

5. Unité de coupe selon la revendication 1, caractérisée en ce qu'une poignée (44) est intégrée dans la face supérieure (20) du carter de l'unité de coupe.

6. Unité de coupe selon la revendication 1, caractérisée en ce que la paroi latérale (22) du carter (12) de l'unité de coupe est équipée d'une lèvre intérieure circonférentielle (68).

7. Unité de coupe selon une ou plusieurs des revendications précédentes, caractérisée en ce que l'arbre (16) est équipé de première, seconde et troisième entretoises (46,48,50), qui s'appliquent contre les bagues intérieures des deux paliers (30,32), la première entretoise (46) s'étendant vers le haut à partir du palier supérieur (30) et s'appliquant contre une poulie à courroie (18) emmanchée sur l'arbre (16), tandis que la seconde entretoise (48) est prévue entre les deux paliers (30,32) et que la troisième entretoise (50) s'étend vers le bas à partir du palier inférieur (32) et s'applique contre une partie formant bride (54), qui est reliée à l'arbre (16).

8. Unité de coupe selon la revendication 7, caractérisée en ce que la lame de coupe (14) s'applique contre la face inférieure de la partie formant bride (54).

9. Unité de coupe selon les revendications 7 et 8, caractérisée en ce qu'un écrou respectif (52,56) peut être vissé sur les deux extrémités de l'arbre (16).

10. Unité de coupe selon une ou plusieurs des revendications précédentes, caractérisée en ce que le carter de l'unité de coupe est réalisé en matière plastique.
